(19)

Europäisches
Patentamt
European
Patent Office
Office européen
des brevets

(11) **EP 3 805 729 A1**

(12) **EUROPEAN PATENT APPLICATION**
published in accordance with Art. 153(4) EPC

(43) Date of publication:
**14.04.2021 Bulletin 2021/15**

(21) Application number: **19810173.5**

(22) Date of filing: **28.05.2019**

(51) Int Cl.:
*G01N 1/00* (2006.01)     *G01N 15/00* (2006.01)
*G01N 15/04* (2006.01)    *G01N 33/00* (2006.01)
*B82Y 5/00* (2011.01)     *B82Y 15/00* (2011.01)
*B82Y 30/00* (2011.01)

(86) International application number:
**PCT/CL2019/050044**

(87) International publication number:
**WO 2019/227246 (05.12.2019 Gazette 2019/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.06.2018 CL 20181473**

(71) Applicant: **Universidad Técnica Federico Santa
María
Valparaiso (CL)**

(72) Inventor: **MONTERO SILVA, Francisco
Valdivia (CL)**

(74) Representative: **Herrero & Asociados, S.L.
Cedaceros, 1
28014 Madrid (ES)**

(54) **KIT AND METHODS FOR ASSESSING THE ADSORBENT PROPERTIES OF THE SURFACE OF
A MATERIAL**

(57)     The present invention relates to a kit and a method for assessing the electrostatic component of the surface of a material of interest by assessing the capacity to adsorb cationic or anionic molecules on the surface of the material of interest, and a method for assessing the lyophobic component of the surface of a material of interest by characterising the adsorption and desorption of molecules without elementary charge from the surface of the material of interest.

EP 3 805 729 A1

## Description

**FIELD OF APPLICATION**

The present invention relates to the field of chemistry-physics, more specifically to a kit and methods to assess the adsorbent properties of the surface of a material of interest to be studied using cationic, anionic, or uncharged (no elementary charge) molecules.

The kit of the present invention comprises cationic, anionic, or uncharged molecules.

**BACKGROUND OF THE INVENTION**

Exposing a material to a liquid phase allows the adsorption of molecules dissolved in the liquid phase into the material. This adsorption can be mediated, for example, by electrostatic interactions, by lyophobia of the dissolved molecules, among others, and depends at least in part on the composition of the liquid phase, on the composition of the molecules and on the composition of the surface of the material.

There are technologies that allow the characterization of the surface properties of a material. For example, instruments for measuring nitrogen adsorption using the BET method (Brunauer, Emmett, and Teller) allow to determine the surface area value of the surface of a material. The determination of flux potentials and light scattering under microelectrophoresis conditions allows to measure the difference in electrical potential between the sine of a liquid phase and the surface of a material.

However, none of these technologies allow to assess the chemical-physical properties of the surface of a material. For this reason, it is necessary to make available kits and methods to characterize the composition of the surface of a material with respect to its potential to adsorb cationic, anionic, or uncharged molecules. The present invention delivers a solution to this and other limitations of previous technologies.

**SUMMARY OF THE INVENTION**

The present invention describes a kit and methods to assess the adsorbent properties of the surface of a material of interest to be studied in terms of its ability to interact with cationic, anionic, or uncharged molecules.

The kit of the present invention comprises a solution volume containing cationic molecules, a solution volume containing anionic molecules, and a solution volume containing molecules with no elementary charge.

The material of interest of the present invention corresponds to any material to be assessed, for example, a metallic surface, a metallic nanoparticle surface, such as a volume of colloid containing a particulate material in dispersed state whose surface is modified with organic molecules of known chemical characteristics or any unknown surface to be studied. The surface of the material of interest may comprise an electrostatic component and a lyophobic component, the electrostatic component of the surface being a motif with elementary charges and the lyophobic component of the surface a nonpolar motif with no elementary charges.

The methods to assess the adsorbent properties of the surface of a material of interest of the present invention correspond to a method that defines the electrostatic component of the surface and a method that defines the lyophobic component of the surface. In order to define the electrostatic component of the surface of the material of interest, this invention provides a method that assesses the adsorption of cationic and anionic molecules, in the absence and presence of ionizable electrolytes that generate ionic strength. In order to define the lyophobic component of the surface of the material of interest, this invention provides a method that assesses the adsorption and desorption of molecules with no elementary charge.

The methods comprise obtaining test samples and control samples. The test samples comprise surface amounts of the material of interest exposed to amounts of the solution volumes contained in the kit, while control samples comprise equivalent amounts of the solution volumes contained in the kit. After sampling, the methods allow to determine the number of molecules adsorbed on the surface of the material of interest. Finally, the comparison of the results obtained with each sample allows to define the adsorbent properties of the surface of the material of interest based on its ability to interact with cationic, anionic, or uncharged molecules.

**BRIEF DESCRIPTION OF THE DRAWINGS**

The invention will be described hereunder with reference to the accompanying drawings, in which:

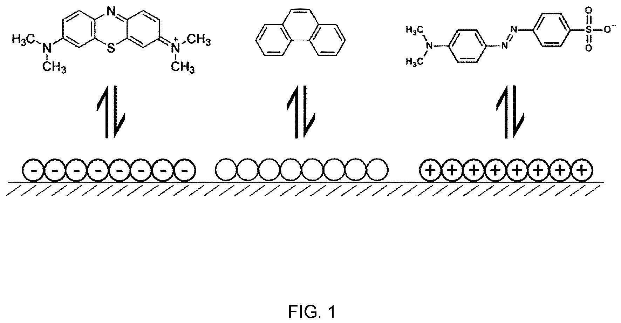

Figure 1 shows a scheme of the attraction interactions between the surface of a material of interest and methylene blue molecules (1), phenanthrene molecules (2), and methyl orange molecules (3).

Figure 2 shows a scheme of the method for assessing the electrostatic interaction between the surface of a material of interest and molecules with opposite elementary charge, that is, cationic and anionic molecules.

Figure 3 shows a scheme of the method for assessing the interaction between the surface of a material of interest and molecules with no elementary charge.

Figure 4 shows a visible spectrum of an AuNP@MUA colloid (solid line) and a particle-free solution (dashed line) obtained from a volume of the same AuNP@MUA colloid.

Figure 5 shows an amount of methylene blue molecules (1) and methyl orange molecules (3) that interact with the surface of a MUA monolayer after exposure to 300 pmol of each compound in the presence and absence of 10mM NaCl.

Figure 6 shows an amount of phenanthrene molecules (2) adsorbed on the surface of a MUA monolayer after exposure to 600 pmol of the compound, and an amount of desorbed phenanthrene molecules after being transferred to the immiscible nonpolar solvent, ethyl acetate.

## DETAILED DESCRIPTION OF THE INVENTION

The present invention describes a kit and methods to assess the adsorbent properties of the surface of a material of interest to be studied in terms of its ability to interact with cationic, anionic, or uncharged molecules.

The present invention refers to a kit, a method to assess the electrostatic component of the surface of a material of interest by assessing the adsorption ability of cationic or anionic molecules on the surface of the material of interest, and a method to assess the lyophobic component of the surface of a material of interest by characterizing the adsorption and desorption of molecules with no elementary charge from the surface of the material of interest.

As used in the present invention, the following terms will be understood as follows:

"molecule", represents a defined chemical species.

"molecule with elementary charge", represents an ionized molecule.

"molecule with no elementary charge", represents a neutral molecule whose formal unit electrical charges located on non-adjacent atoms have the same sign.

All other terms used in the present invention should be interpreted in a similar way to that set forth in scientific literature. Furthermore, it is noted that in the present invention the steps of the methods may operate in sequences other than those described or illustrated in this disclosure.

The present invention describes a kit to assess the adsorbent properties of the surface of a material of interest that comprises a solution volume containing cationic molecules, a solution volume containing anionic molecules, and a solution volume containing molecules with no elementary charge.

In the present invention, a cationic molecule can be methylene blue and its derivatives; tetrazolium derivatives such as 2,3,5-triphenyltetrazolium chloride (TTC), 3-(4,5-dimethylthiazol-2-yl)-2,5-diphenyltetrazolium bromide (MTT); phenazine derivatives such as phenazine methosulfate, safranin-O, and phenophosphranine; diarylmethane as Auramine O (basic yellow 2); triarylmethane derivatives such as malachite green, fuchsin, crystal violet. For its part, an anionic molecule can be derived from fluorescein such as erythrosine, fluorescein isothiocyanate, eosin; sulfonic acid derivatives such as 1,5-naphthalenedisulfonic acid, methyl orange (azo), acid orange (azo), tosylate, picric acid; and a molecule with no elementary charge can be neutral non-zwitterionic molecules (excluding zwitterions) such as phenazine; aromatic hydrocarbons such as anthracene, phenanthrene, naphthalene, azulene, pyrene.

The adsorption ability of these molecules will depend on the physicochemical properties of the surface of the material of interest. If the surface of the material of interest contains motifs with ionized groups, the cationic and anionic molecules in the kit will be adsorbed to the surface reversibly by electrostatic interactions. If the surface of the material of interest contains nonpolar (lyophobic) motifs, the molecules with no elementary charge in the kit will be excluded from the aqueous liquid solvent and adsorbed on the surface of the material, also reversibly. In this manner, the determination of the reversible adsorption ability of these molecules on the surface of a material of interest allows to infer the intrinsic properties of the material of interest.

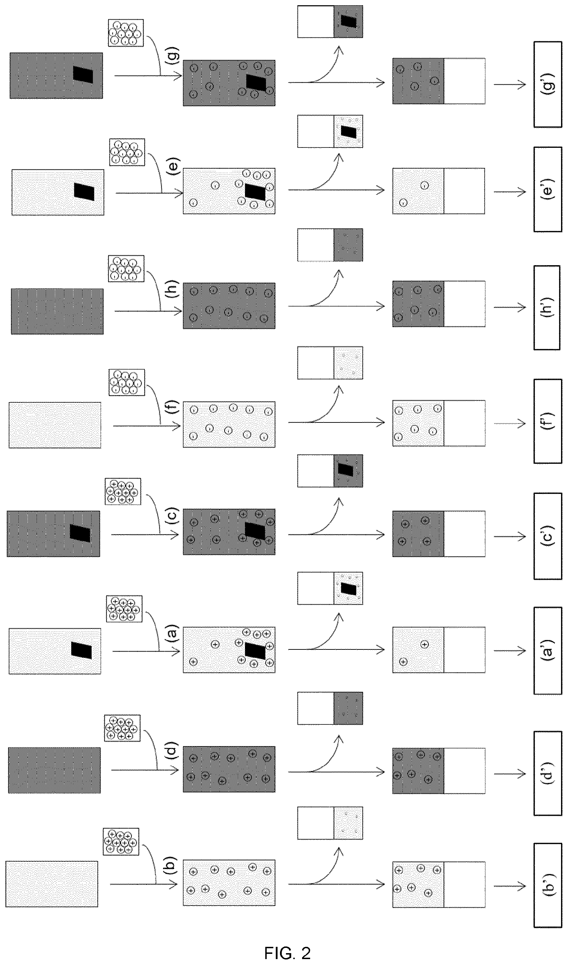

The method for assessing the electrostatic component of the surface of a material of interest, of the present invention, comprises obtaining test samples and control samples, which in turn comprises and does not comprise the addition of electrolytes to generate ionic strength (Figure 2). The test samples, with ionic strength and without ionic strength, comprise defined amounts of surface of the material of interest exposed to a liquid phase that comprises amounts of the solution volumes of ionic molecules contained in the kit, while the control samples, also with ionic strength and without ionic strength, comprise a volume of the same liquid phase comprised in the test samples and an amount of the solution volumes of ionic molecules contained in the kit. For all samples, the concentration of ionic molecules that come from the kit and the ratio between the surface area of the material of interest and the final volume of the sample must be the same. The ionizable electrolytes that generate ionic strength are selected from NaCl, KCl, CsCl, RbCl, $NH_4Cl$, CaCl2, MgCl2, NaF, KF, NaBr, KBr, CsBr, $CaBr_2$, NaI, KI, $(NH_4)_2SO_4$, $Na_2SO_4$, $K_2SO_4$, $MgSO_4$, $NaNO_3$, $KNO_3$, $NH_4NO_3$, $Ca(NO_3)_2$, $Mg(NO_3)_2$, $Na_3PO_4$, $K_3PO4$, etc.

If the concentration of ionic molecules in a volume of the liquid phase free of the surface of interest is determined to be greater in the presence of the electrolytes, it is demonstrated that the adsorption of the molecules with elementary charge is reversible and mediated by an electrostatic component. This method comprises determining the amount of ionic molecules that are adsorbed to the surface of a material of interest by electrostatic interactions. In this manner, it can be inferred whether the surface of a material of interest contains motifs with non-zero elementary charges (ionized motifs). The assay was repeated three times in order to have statistical validity and each sample was assessed independently (Figure 2).

Figure 2 shows schematically the method for assessing the electrostatic component of the surface of a material of interest, of the present invention, which comprises:

(a) Obtaining cations test sample by exposing a surface to a solution volume of cationic molecules.

(b) Obtaining cations control sample composed of a solution volume of cationic molecules, so that the molar composition and concentration of cationic molecules is identical to that of the cationic molecules used in step (a).

(c) Obtaining cations test sample with ionizable electrolytes by exposing a surface to a solution volume of cationic molecules and to a volume of ionizable electrolytes, so that the molar composition and concentration of cationic molecules is identical to that of the cationic molecules used in step (a), and the ratio value between surface area and volume of the sample liquid is identical to the ratio value used in step (a).

(d) Obtaining cations control sample with ionizable electrolytes by mixing a solution volume of cationic molecules with a volume of ionizable electrolytes, so that the molar composition and concentration of cationic molecules is identical to that of the cationic molecules used in step (a), and the molar composition and concentration of ionizable electrolytes is identical to that of the ionizable electrolytes used in step (c).

(e) Obtaining anions test sample by exposing a surface to a solution volume of anionic molecules, so that the molar concentration of anionic molecules is identical to that of the cationic molecules used in step (a), and the ratio value between the surface area and the volume of the sample liquid is identical to the ratio value used in step (a).

(f) Obtaining anions control sample composed of a solution volume of anionic molecules, so that the molar composition and concentration of anionic molecules is identical to that of the anionic molecules used in step (e).

(g) Obtaining anions test samples with ionizable electrolytes by exposing a surface to a solution volume of anionic molecules and to a volume of ionizable electrolytes, so that the molar composition and concentration of anionic molecules is identical to that of the anionic molecules used in step (e), the molar composition and concentration of ionizable electrolytes is identical to that of the ionizable electrolytes used in stage (c), and the ratio value between the surface area and the volume of the sample liquid is identical to the ratio value used in step (a).

(h) Obtaining anions control sample with ionizable electrolytes by mixing a solution volume of anionic molecules with a volume of ionizable electrolytes, so that the molar composition and concentration of anionic molecules is identical to that of the anionic molecules used in step (e), and the molar composition and concentration of ionizable electrolytes is identical to that of the ionizable electrolytes used in step (c).

(i) Recovering from each sample a volume of liquid free of adsorbing surface.

(j) Measuring to the volume recovered from the sample obtained in step (a) a parameter proportional to the concentration of cationic molecules.

(k) Measuring to the volume recovered from the sample obtained in step (b) a parameter proportional to the concentration of cationic molecules.

(l) Measuring to the volume recovered from the sample obtained in step (c) a parameter proportional to the concentration of cationic molecules.

(m) Measuring to the volume recovered from the sample obtained in step (d) a parameter proportional to the concentration of cationic molecules.

(n) Measuring to the volume recovered from the sample obtained in step (e) a parameter proportional to the concentration of anionic molecules.

(ñ) Measuring to the volume recovered from the sample obtained in step (f) a parameter proportional to the concentration of anionic molecules.

(o) Measuring to the volume recovered from the sample obtained in step (g) a parameter proportional to the concentration of anionic molecules.

(p) Measuring to the volume recovered from the sample obtained in step (h) a parameter proportional to the concentration of anionic molecules.

(q) Determining the amount of cationic molecules adsorbed on the surface of the material using the equation:

$$n_{cationes} = \left( [\,]_0 - \frac{[\,]_0 @_S}{@_r} \right) V_S$$

where $n_{cationes}$ corresponds to the amount of cationic molecules adsorbed on the surface of the material of interest, $[\ ]_0$ corresponds to the value of concentration of cationic molecules used during the steps of sampling, $@_s$ corresponds to the empirical value obtained in step (j), $@_r$ corresponds to the empirical value obtained in step (k), and $V_s$ corresponds to the volume of the liquid added to the surface of the sample of interest obtained in step (a).

(r) Determining the amount of cationic molecules adsorbed on the surface of the material of interest in the presence of ionizable electrolytes using the equation:

$$n'_{cationes} = \left( [\ ]_0 - \frac{[\ ]_0 @_s}{@_r} \right) V_s$$

where $n'_{cationes}$ corresponds to the amount of cationic molecules adsorbed on the surface of the material in the presence of ionizable electrolytes, $[\ ]_0$ corresponds to the value of concentration of cationic molecules used during the steps of sampling, $@_s$ corresponds to the empirical value obtained in step (I), $@_r$ corresponds to the empirical value obtained in step (m), and $V_s$ corresponds to the volume of the liquid added to the surface of the sample of interest obtained in step (c).

(s) Determining the amount of anionic molecules adsorbed on the surface of the material using the equation:

$$n_{aniones} = \left( [\ ]_0 - \frac{[\ ]_0 @_s}{@_r} \right) V_s$$

where $n_{aniones}$ corresponds to the amount of anionic molecules adsorbed on the surface of the material, $[\ ]_0$ corresponds to the value of concentration of anionic molecules used during the steps of sampling, $@_s$ corresponds to the empirical value obtained in step (n), $@_r$ corresponds to the empirical value obtained in step (ñ), and $V_s$ corresponds to the volume of the liquid added to the surface of the sample obtained in step (e).

(t) Determining the amount of anionic molecules adsorbed on the surface of the material in the presence of ionizable electrolytes using the equation:

$$n'_{aniones} = \left( [\ ]_0 - \frac{[\ ]_0 @_s}{@_r} \right) V_s$$

where $n'_{aniones}$ corresponds to the amount of anionic molecules adsorbed on the surface of the material,

$[\ ]_0$ corresponds to the value of concentration of anionic molecules used during the steps of sampling, $@_s$ corresponds to the empirical value obtained in step (o), $@_r$ corresponds to the empirical value obtained in step (p), and $V_s$ corresponds to the volume of the liquid added to the surface of the sample obtained in step (g).

Schematically in figure 2 the concentration of molecules determined in each sample is represented by:

    (a') concentration value of cations control molecules.
    (b') concentration value of cations control molecules.
    (c') concentration value of cations test molecules with electrolytes.
    (d') concentration value of cations control molecules with electrolytes.
    (e') concentration value of anions test molecules.
    (f') concentration value of anions control molecules.
    (g') concentration value of anions test molecules with electrolytes.
    (h') concentration value of anions control molecules with electrolytes.

The present invention also refers to a method to assess the lyophobic component of the surface of a material of interest. In this case, the molecules with no elementary charge can be adsorbed to the surface by lyophobia. Reciprocally, it can be inferred if the surface of the material contains lyophobic motifs. If desorption is detected in the presence of an immiscible nonpolar solvent with the liquid phase of the test sample, it is demonstrated that the adsorption of the molecules with no elementary charge is mediated by lyophobia.

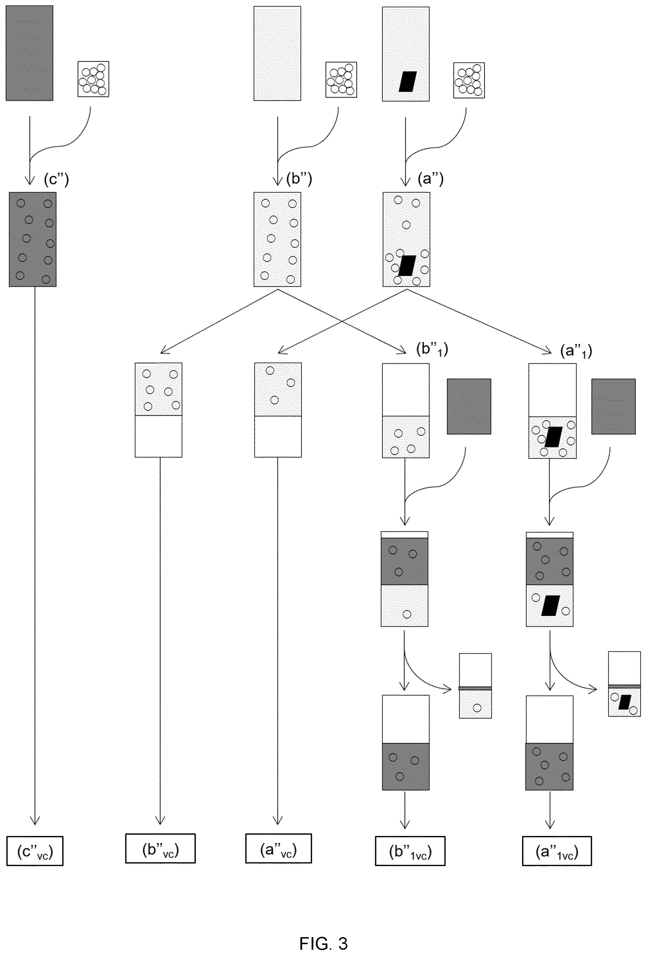

The method for assessing the lyophobic component comprises determining the amount of molecules with no elementary charge that are adsorbed on the surface of the material of interest. For this, the method comprises obtaining a test sample, a control sample, and a nonpolar solvent control sample (Figure 3). To obtain the test sample, an amount of the material of interest containing a defined amount of surface area is exposed to a liquid phase comprising an amount of a solution volume of the kit containing the molecules with no elementary charge. The control sample comprises a volume of the same liquid phase used for obtaining the test samples and a solution volume of the kit containing the molecules with no elementary charge, and the nonpolar solvent control sample comprises a solution volume of the kit containing molecules with no elementary charge diluted in an immiscible nonpolar solvent with the liquid phase of the test sample and the control sample. For all samples, the concentration of molecules with no elementary charge must be the same. The final volume of the test sample and the control sample must be the same. Subsequently, from the test sample and control sample, an identical volume of liquid free of adsorbent surface is recovered and stored, and the remaining fractions are mixed with a volume of immiscible nonpolar solvent with the liquid phase of the remaining fractions. A volume of immiscible nonpolar solvent is then recovered from each mixture. Finally, for each volume recovered, a parameter proportional to the amount of molecules with no elementary charge is measured.

Figure 3 shows schematically the method for assessing the lyophobic component of the surface of a material of interest, of the present invention, which comprises:

(a") Obtaining test sample by exposing an amount of surface to a solution volume of molecules with no elementary charge.

(b") Obtaining control sample comprised of a solution volume of molecules with no elementary charge, so that the volume of the sample and the molar concentration of molecules with no elementary charge are identical to those used in obtaining the test sample of step (a").

(c") Obtaining nonpolar solvent control sample by mixing a solution volume of molecules with no elementary charge with a volume of immiscible nonpolar solvent, so that in the mixture the concentration value of molecules is equal to the concentration value of molecules of the test sample obtained in step (a").

(d") Recovering from each sample an identical volume of liquid free of adsorbing surface, and storing a remaining volume of the control sample (b"₁) and of the test sample containing the surface (a"₁).

(e") Adding to the remaining volume of test sample (a"₁) obtained in step (d") a volume of nonpolar solvent.

(f") Adding to the remaining volume of control sample (b"₁) obtained in step (d") an immiscible nonpolar solvent volume identical to that used in step (e").

(g") Recovering a volume of immiscible nonpolar solvent from the mixture obtained in step (e").

(h) Recovering a volume of immiscible nonpolar solvent from the mixture obtained in step (f").

(i") Measuring to the volume of test sample recovered in step (d") a parameter proportional to the amount of molecules with no elementary charge.

(j") Measuring to the volume of control sample recovered in step (d") a parameter proportional to the amount of molecules with no elementary charge.

(k") Measuring to the volume of nonpolar solvent control sample obtained in step (d") a parameter proportional to the amount of molecules with no elementary charge.

(l") Measuring to the volume of immiscible nonpolar solvent recovered in step (g") a parameter proportional to the amount of molecules with no elementary charge.

(m") Measuring to the volume of immiscible nonpolar solvent recovered in step (h") a parameter proportional to the amount of molecules with no elementary charge.

(n") Determining the amount of molecules with no elementary charge adsorbed on the surface of the material using the equation:

$$n_{\text{sin carga}} = \left( [\ ]_0 - \frac{[\ ]_0 @_S}{@_r} \right) V_S$$

where $n_{\text{sin carga}}$ corresponds to the amount of molecules with no elementary charge adsorbed on the surface of the material, $[\ ]_0$ corresponds to the concentration value of molecules with no elementary charge used during the sampling steps, $@_S$ corresponds to the empirical value obtained in step (i"), $@_r$ corresponds to the empirical value obtained in step (j"), and $V_S$ corresponds to the volume of liquid contained in the test sample obtained in step (a").

(ñ") Determining the amount of molecules with no elementary charge desorbed on the surface of the material using the equation:

$$n'_{\text{sin carga}} = \left( [\ ]_0 - \frac{[\ ]_0 @_S}{@_r} \right) V_S$$

where $n'_{\text{sin carga}}$ corresponds to the amount of molecules with no elementary charge desorbed from the surface of the material, $[\ ]_0$ corresponds to the value of concentration of molecules with no elementary charge used during the sampling steps, $@_S$ corresponds to the empirical value obtained in steps (l") or (m"), $@_r$ corresponds to the empirical value obtained in step (k"), and $V_S$ corresponds to the volume of immiscible nonpolar solvent added to the samples during the development of steps (e") or (f').

(o") Developing material balance calculations to infer the amount of molecules with no formal charge adsorbed and desorbed from the surface of the material.

Schematically in figure 3 the concentration of molecules with no elementary charge determined in each sample is represented by:

(a"$_{vc}$) concentration value of test sample molecules.

(b"$_{vc}$) concentration value of control sample molecules.

(c"$_{vc}$) concentration value of nonpolar solvent test sample molecules.

(b"$_{1vc}$) concentration value of remaining nonpolar solvent control sample molecules.

(a"$_{1vc}$) concentration value of remaining nonpolar solvent test sample molecules.

Next, an example representing an embodiment of the present invention is described, where the chosen material of interest corresponds to a monolayer of 11-thioundecanoic acid (MUA) self-assembled molecules on nuclei of gold nanoparticles.

## EXAMPLE 1

### Obtaining a volume of colloid by self-assembly of 11-mercaptoundecanoic acid molecules around gold metallic nuclei (material of interest).

The sulfhydryl group of 11-mercaptoundecanoic acid (MUA) molecules covalently reacts with gold atoms, generating a self-assembled monolayer of MUA molecules around metallic nuclei of gold nanoparticles. This monolayer of MUA molecules contains an internal hydrophobic motif located just above the surface of the gold nanoparticles, and an external hydrophilic motif that interacts with the continuous phase of the colloid. The internal hydrophobic motif is formed by grouping of the aliphatic chains, and the external hydrophilic motif is formed by grouping of carboxylate and carboxylic groups.

To obtain the metallic nuclei, gold nanoparticles were synthesized by means of reduction by citrate ion methodology. To self-assemble the MUA molecules, a colloid volume comprising the synthesized gold nanoparticles was functionalized by reduction of citrate ions (50 ml) with a concentration of MUA molecules at 100 $\mu$M. To decrease the concentration of residual compounds in the continuous phase of the colloid, the volume of functionalized nanoparticles was subjected to ultrafiltration by centrifugation using a commercial filter with exclusion size equal to 100 kDa. The sample was centrifuged at 4,000xg for 15 min and a 1 ml retentate of enriched colloid in MUA self-assembled monolayer on gold nanoparticles was obtained. Permeate was discarded and 9 ml of 1.2 mM sodium citrate buffer was added to the retentate. The ultrafiltration and resuspension process was repeated 6 times.

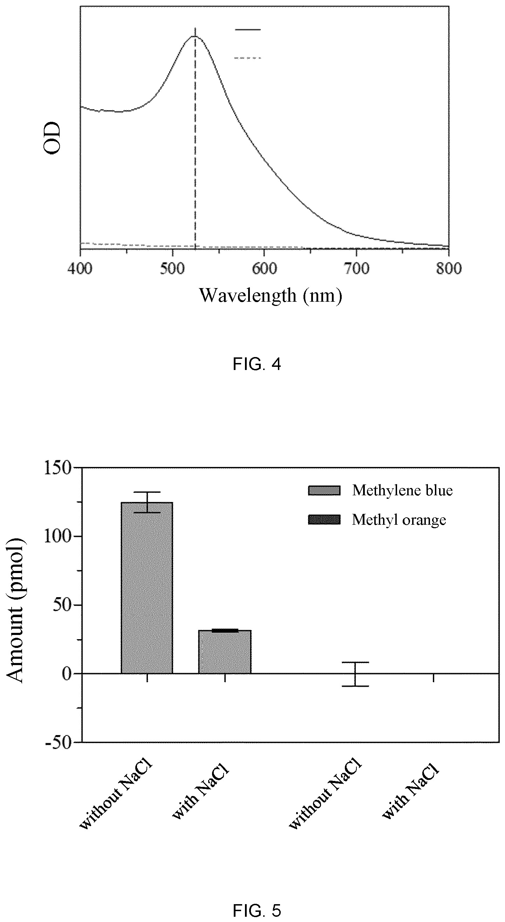

After the described process, an enriched colloid in MUA monolayer was obtained on gold nanoparticles (AuNP@MUA colloid). The colloid presented a maximum absorbance value of the plasmon band of 60/cm (Figure 4), with a size distribution by number of particles of 13.55 nm (d.nm). The continuous phase of the colloid contained 1.2 mM sodium citrate, traces of gold, and a MUA concentration equal to or less than 1 pM. The zeta potential of the colloid was -33.5 mV.

Subsequently, in order to estimate the surface area value of the MUA monolayer, the number of nanoparticles contained in a volume of AuNP@MUA colloid was determined and was related to the surface area value of a representative sphere of AuNP@MUA nanoparticles.

To determine the number of particles contained in a volume of AuNP@MUA colloid, the diameter of the metallic nuclei without MUA monolayer was used and was related to the value of the maximum absorbance of the plasmon band as described by Haiss et al (2007). Dynamic light scattering measurements indicated that the value of the diameter of the metallic nuclei according to the number of particles was 10.53 nm. The maximum absorbance value of the plasmon band was 60/cm. This indicates that the AuNP@MUA colloid contained $4.51 \times 10^{11}$ nanoparticles per microliter of dispersion.

To calculate the surface area of a representative sphere of AuNP@MUA nanoparticles, the diameter value obtained from the AuNP@MUA colloid was used by means of dynamic light scattering measurements. The diameter value was 13.55 nm, and the replacement of this value in the simple relation to determine the surface area of a sphere indicates that the surface area of a representative sphere of AuNP@MUA nanoparticles is 576.8 nm$^2$.

Finally, the linear relationship between the number of particles and the surface area of the representative particle defines the AuNP@MUA colloid as a substance that contains 2.60 cm$^2$ of MUA monolayer per microliter of colloidal dispersion.

## EXAMPLE 2

### Method to assess the electrostatic component of the surface of the MUA monolayer by determining the adsorption of molecules with elementary charge mediated by electrostatic interactions.

The adsorption of methylene blue molecules on the surface of the MUA monolayer was determined, in the presence and absence of the NaCl electrolyte. In order to obtain the test sample, 364 cm$^2$ of MUA monolayer surface were exposed to 300 pmol of methylene blue, in a final reaction volume of 150 $\mu$l. For this, 140 $\mu$l of AuNP@MUA colloid (maximum absorbance OD of the plasmon band = 30/cm) were mixed with 5 $\mu$l of Milli-Q water and 5 $\mu$l of a standard solution of 60.00 $\mu$M methylene blue dissolved in Milli-Q water. To obtain the control sample, 140 $\mu$l of particle-free solution obtained from a volume of the AuNP@MUA colloid (maximum absorbance OD of the plasmon band = 0/cm) were mixed with 5 μl of Milli-Q water and with 5 μl of a standard 60.00 μM methylene blue solution dissolved in Milli-Q water. The electrolyte test sample and electrolyte control sample were obtained in an identical manner to the previous ones, but using 5 μl of 300 mM NaCl instead of 5 μl of Milli-Q water. To separate the MUA monolayer from the aqueous solvent, all samples were centrifuged at 24,000xg for 15 min. A volume of 130 μl free of AuNP@MUA nanoparticles was recovered from all samples. The amount of methylene blue was measured in all recovered volumes by reversed-phase high-performance liquid chromatography (RP-HPLC) and UV visible detection using a diode array detector. The methylene blue signal was detected at a wavelength of 665 nm (mAU). The amount of methylene blue was determined as value of integration area of the signal corresponding to the elution peak (mAU.min). Test samples, control samples, electrolyte test samples, and electrolyte control samples were independently obtained and processed. Each sample was measured independently. The assay was repeated three times in order to have statistical validity.

The results of concentration determination in the recovered volumes indicated that 124.5 pmol of methylene blue is adsorbed on the surface of the MUA monolayer in the absence of NaCl, while 31.5 pmol of methylene blue was adsorbed in the presence of 10 mM NaCl. The difference between these values indicates that, under these experimental conditions, at least 93.0 pmol of methylene blue are adsorbed to the surface of the MUA monolayer by means of electrostatic interactions (Figure 5).

In parallel, the adsorption of methyl orange molecules on the surface of the MUA monolayer was determined, in the presence and absence of the NaCl electrolyte. All the samples were obtained in an identical manner to the samples containing methylene blue, but a 60 μM methyl orange standard solution was used instead of a 60 μM methylene blue standard solution. The samples were processed in an identical manner to the samples containing methylene blue. The amount of methyl orange was measured in all recovered volumes by RP-HPLC and UV visible detection using a diode array detector. The methyl orange signal was detected at a wavelength of 432 nm (mAU). The amount of methyl orange was determined as value of integration area of the signal corresponding to the elution peak (mAU.min). Test samples, control samples, electrolyte test samples, and electrolyte control samples were independently obtained and processed. Each sample was measured independently. The assay was repeated three times in order to have statistical validity.

The results of concentration determination in the recovered volumes indicated that methyl orange does not adsorb on the surface of the MUA monolayer, neither in the absence nor in the presence of 10 mM NaCl (Fig. 5).

The comparison of the results obtained with methylene blue and methyl orange shows that the surface of the MUA monolayer adsorbs cationic molecules by electrostatic interactions, and does not adsorb anionic molecules. This indicates that the composition of the surface of the MUA monolayer contains motifs ionized with electron elementary charges and does not contain motifs ionized with proton elementary charges.

## EXAMPLE 3

**Method to assess the lyophobic component of the surface of the MUA monolayer by determining the adsorption of hydrophobic molecules with no elementary charge.**

The adsorption of phenanthrene molecules on the surface of the MUA monolayer and the desorption of the same molecules were determined after exposure of the surface to the organic solvent ethyl acetate. To obtain the test sample, 728 $cm^2$ of MUA monolayer surface were exposed to 600 pmol of phenanthrene, in a final reaction volume of 150 μl. For this, 140 μl of AuNP@MUA colloid (maximum absorbance OD of the plasmon band = 60/cm) were mixed with 5 μl of Milli-Q water and 5 μl of a standard solution of 120.00 μM phenanthrene dissolved in ultra-pure ethanol. To obtain the control sample, 140 μl of particle-free solution obtained from a volume of the same AuNP@MUA colloid (maximum absorbance OD of the plasmon band = 0/cm) were mixed with 5 μl of Milli-Q water and 5 μl of a standard 120.00 μM phenanthrene solution dissolved in ultra-pure ethanol. The nonpolar solvent control sample was obtained after mixing 145 μl of ethyl acetate with 5 μl of a standard 120.00 μM phenanthrene solution dissolved in ultra-pure ethanol. To concentrate the surface of MUA monolayer, all samples were centrifuged at 24,000xg for 15 min. A volume of 130 μl free of AuNP@MUA nanoparticles was recovered from the control sample and the test sample. The remaining volumes of control sample (20 μl) and enriched MUA monolayer surface test sample (20 μl) were independently mixed with 150 μl ethyl acetate. Subsequently, a volume of 125 μl of ethyl acetate was recovered from each mixture. The amount of phenanthrene was measured in all recovered volumes and in the nonpolar solvent control sample by RP-HPLC and UV visible detection using a diode array detector. The phenanthrene signal was detected at a wavelength of 251 nm (mAU). The amount of phenanthrene was determined as value of integration area of the signal corresponding to the elution peak (mAU.min). Test samples, control samples, and nonpolar solvent control samples were independently obtained and processed. Each sample was measured independently. The assay was repeated three times in order to have statistical validity.

The results of phenanthrene concentration determination indicated that, after exposure to 4.00 μM phenanthrene, the concentration of phenanthrene dissolved in the aqueous liquid phase of the AuNP@MUA colloid is 0.31 μM. On the other hand, the concentration of phenanthrene determined in the volumes of ethyl acetate recovered from the control samples and test samples was 0.24 and 1.15 μM.

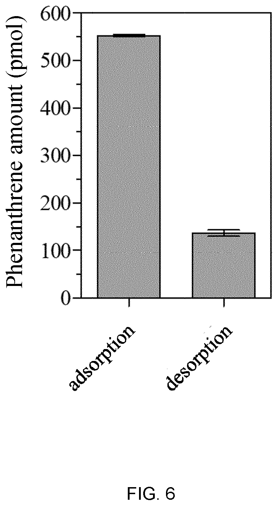

Material balance calculations indicate that under these experimental conditions the surface of the MUA monolayer adsorbs 553.5 pmol of phenanthrene, while in the presence of ethyl acetate at least 136.5 pmol of phenanthrene are desorbed (Figure 6).

Analysis of the data indicates that the surface of the MUA monolayer adsorbs molecules with no elementary charge, and does so reversibly. This indicates that the composition of the MUA monolayer surface contains a lyophobic motif that allows adsorption of phenanthrene molecules.

**Claims**

1. A kit to assess the adsorbent properties of the surface of a material of interest, **CHARACTERIZED in that** said kit contains:

   a solution volume containing cationic molecules,
   a solution volume containing anionic molecules, and
   a solution volume containing molecules with no elementary charge,

2. The kit in accordance with claim 1, **CHARACTERIZED in that** the cationic molecules are selected from molecules such as methylene blue and its derivatives; tetrazolium derivatives such as 2,3,5-triphenyltetrazolium chloride (TTC), 3-(4,5-dimethylthiazol-2-yl)-2,5-diphenyltetrazolium bromide (MTT); phenazine derivatives such as phenazine methosulfate, safranin-O, and phenophosphranine; diarylmethane as Auramine O (basic yellow 2); triarylmethane derivatives such as malachite green, fuchsin, crystal violet.

3. The kit in accordance with claim 1, **CHARACTERIZED in that** the anionic molecules are selected from molecules such as fluorescein and its derivatives such as erythrosine, fluorescein isothiocyanate, eosin; sulfonic acid derivatives such as 1,5-naphthalenedisulfonic acid, methyl orange (azo), acid orange (azo), tosylate, picric acid.

4. The kit in accordance with claim 1, **CHARACTERIZED in that** the molecules with no elementary charge are selected from neutral non-zwitterionic molecules such as phenazine; aromatic hydrocarbons such as anthracene, phenanthrene, naphthalene, azulene, pyrene.

5. A method to assess the electrostatic component of the surface of a material of interest, **CHARACTER-**

**IZED in that** it comprises assessing the adsorption of cationic and anionic molecules, with addition and without addition of electrolytes that generate ionic strength, wherein the method includes:

   i) having a material of interest;
   ii) having a kit as defined in claims 1 to 4;
   iii) having an electrolyte;

and wherein the method also comprises:

   (a) obtaining cations test sample by exposing a surface to a solution volume of cationic molecules;
   (b) obtaining cations control sample composed of a solution volume of cationic molecules, so that the molar composition and concentration of cationic molecules is identical to that of the cationic molecules used in step (a);
   (c) obtaining cations test sample with ionizable electrolytes by exposing a surface to a solution volume of cationic molecules and to a volume of ionizable electrolytes, so that the molar composition and concentration of cationic molecules is identical to that of the cationic molecules used in step (a), and the ratio value between surface area and volume of the sample liquid is identical to the ratio value used in step (a);
   (d) obtaining cations control sample with ionizable electrolytes by mixing a solution volume of cationic molecules with a volume of ionizable electrolytes, so that the molar composition and concentration of cationic molecules is identical to that of the cationic molecules used in step (a), and the molar composition and concentration of ionizable electrolytes is identical to that of the ionizable electrolytes used in step (c);
   (e) obtaining anions test sample by exposing a surface to a solution volume of anionic molecules, so that the molar concentration of anionic molecules is identical to that of the cationic molecules used in step (a), and the ratio value between the surface area and the volume of the sample liquid is identical to the ratio value used in step (a);
   (f) obtaining anions control sample composed of a solution volume of anionic molecules, so that the molar composition and concentration of anionic molecules is identical to that of the anionic molecules used in step (e);
   (g) obtaining anions test samples with ionizable electrolytes by exposing a surface to a solution volume of anionic molecules and to a volume of ionizable electrolytes, so that the molar composition and concentration of anionic molecules is identical to that of the anionic molecules used in step (e), the molar composition and concentration of ionizable electrolytes is identical to that of the ionizable electrolytes used in stage (c), and the ratio value between the surface area and the volume of the sample liquid is identical to the ratio value used in step (a);

(h) obtaining anions control sample with ionizable electrolytes by mixing a solution volume of anionic molecules with a volume of ionizable electrolytes, so that the molar composition and concentration of anionic molecules is identical to that of the anionic molecules used in step (e), and the molar composition and concentration of ionizable electrolytes is identical to that of the ionizable electrolytes used in step (c);

(i) recovering from each sample a volume of liquid free of adsorbing surface;

(j) measuring to the volume recovered from the sample obtained in step (a) a parameter proportional to the concentration of cationic molecules;

(k) measuring to the volume recovered from the sample obtained in step (b) a parameter proportional to the concentration of cationic molecules;

(l) measuring to the volume recovered from the sample obtained in step (c) a parameter proportional to the concentration of cationic molecules;

(m) measuring to the volume recovered from the sample obtained in step (d) a parameter proportional to the concentration of cationic molecules;

(n) measuring to the volume recovered from the sample obtained in step (e) a parameter proportional to the concentration of anionic molecules;

(ñ) measuring to the volume recovered from the sample obtained in step (f) a parameter proportional to the concentration of anionic molecules;

(o) measuring to the volume recovered from the sample obtained in step (g) a parameter proportional to the concentration of anionic molecules;

(p) measuring to the volume recovered from the sample obtained in step (h) a parameter proportional to the concentration of anionic molecules;

(q) determining the amount of cationic molecules adsorbed on the surface of the material using the equation:

$$n_{cationes} = \left( [\ ]_0 - \frac{[\ ]_0 @_S}{@_r} \right) V_S$$

where $n_{cationes}$ corresponds to the amount of cationic molecules adsorbed on the surface of the material of interest, $[\ ]_0$ corresponds to the value of concentration of cationic molecules used during the steps of sampling, $@_s$ corresponds to the empirical value obtained in step (j), $@_r$ corresponds to the empirical value obtained in step (k), and $V_s$ corresponds to the volume of the liquid added to the surface of the sample of interest obtained in step (a);

(r) determining the amount of cationic molecules adsorbed on the surface of the material of interest in the presence of ionizable electrolytes using the equation:

$$n'_{cationes} = \left( [\ ]_0 - \frac{[\ ]_0 @_S}{@_r} \right) V_S$$

where $n'_{cationes}$ corresponds to the amount of cationic molecules adsorbed on the surface of the material in the presence of ionizable electrolytes, $[\ ]_0$ corresponds to the value of concentration of cationic molecules used during the steps of sampling, $@_s$ corresponds to the empirical value obtained in step (l), $@_r$ corresponds to the empirical value obtained in step (m), and $V_s$ corresponds to the volume of the liquid added to the surface of the sample of interest obtained in step (c);

(s) determining the amount of anionic molecules adsorbed on the surface of the material using the equation:

$$n_{aniones} = \left( [\ ]_0 - \frac{[\ ]_0 @_S}{@_r} \right) V_S$$

where $n_{aniones}$ corresponds to the amount of anionic molecules adsorbed on the surface of the material, $[\ ]_0$ corresponds to the value of concentration of anionic molecules used during the steps of sampling, $@_s$ corresponds to the empirical value obtained in step (n), $@_r$ corresponds to the empirical value obtained in step (ñ), and $V_s$ corresponds to the volume of the liquid added to the surface of the sample obtained in step (e); and

(t) determining the amount of anionic molecules adsorbed on the surface of the material in the presence of ionizable electrolytes using the equation:

$$n'_{aniones} = \left( [\ ]_0 - \frac{[\ ]_0 @_S}{@_r} \right) V_S$$

where $n'_{aniones}$ corresponds to the amount of anionic molecules adsorbed on the surface of the material, $[\ ]_0$ corresponds to the value of concentration of anionic molecules used during the steps of sampling, $@_s$ corresponds to the empirical value obtained in step (o), $@_r$ corresponds to the empirical value obtained in step (p), and $V_s$ corresponds to the volume of the liquid added to the surface of the sample obtained in step (g).

6. The method to assess the electrostatic component of the surface of a material of interest in accordance with claim 5, **CHARACTERIZED in that** the electrolyte is selected from salts such as NaCl, KCl, CsCl, RbCl, NH$_4$Cl, CaCl2, MgCl2, NaF, KF, NaBr, KBr, CsBr, CaBr$_2$, NaI, KI, (NH$_4$)$_2$SO$_4$, Na$_2$SO$_4$, K$_2$SO$_4$, MgSO$_4$, NaNO$_3$, KNO$_3$, NH$_4$NO$_3$, Ca(NO$_3$)$_2$, Mg(NO$_3$)$_2$, Na$_3$PO$_4$, K$_3$PO$_4$.

7. The method to assess the electrostatic component of the surface of a material of interest in accordance with claim 6, **CHARACTERIZED in that** the material of interest is a colloid such as the AuNP@MUA colloid.

8. A method to assess the lyophobic component of the surface of a material of interest, **CHARACTERIZED in that** it comprises determining the amount of molecules with no elementary charge that are adsorbed on the surface of the material of interest.

   i) having a material of interest;
   ii) having a kit as defined in claims 1 to 4;
   iii) having an immiscible nonpolar solvent;

and wherein the method also comprises:

   (a") obtaining test sample by exposing an amount of surface to a solution volume of molecules with no elementary charge;
   (b") obtaining control sample comprised of a solution volume of molecules with no elementary charge, so that the volume of the sample and the molar concentration of molecules with no elementary charge are identical to those used in obtaining the test sample of step (a");
   (c") obtaining nonpolar solvent control sample by mixing a solution volume of molecules with no elementary charge with a volume of immiscible nonpolar solvent, so that in the mixture the concentration value of molecules is equal to the concentration value of molecules of the test sample obtained in step (a");
   (d") recovering from each sample an identical volume of liquid free of adsorbing surface, and storing a remaining volume of the control sample (b"1) and of the test sample containing the surface (a"$_1$);
   (e") adding to the remaining volume of test sample (a"$_1$) obtained in step (d") a volume of nonpolar solvent;
   (f") adding to the remaining volume of control sample (b"$_1$) obtained in step (d") an immiscible nonpolar solvent volume identical to that used in step (e");
   (g") recovering a volume of immiscible nonpolar solvent from the mixture obtained in step (e");
   (h) recovering a volume of immiscible nonpolar solvent from the mixture obtained in step (f');

(i") measuring to the volume of test sample recovered in step (d") a parameter proportional to the amount of molecules with no elementary charge;
(j") measuring to the volume of control sample recovered in step (d") a parameter proportional to the amount of molecules with no elementary charge;
(k") measuring to the volume of nonpolar solvent control sample obtained in step (d") a parameter proportional to the amount of molecules with no elementary charge;
(l") measuring to the volume of immiscible nonpolar solvent recovered in step (g") a parameter proportional to the amount of molecules with no elementary charge;
(m") measuring to the volume of immiscible nonpolar solvent recovered in step (h") a parameter proportional to the amount of molecules with no elementary charge;
(n") determining the amount of molecules with no elementary charge adsorbed on the surface of the material using the equation:

$$n_{\text{sin carga}} = \left( [\,]_0 - \frac{[\,]_0 @_S}{@_r} \right) V_S$$

where $n_{\text{sin carga}}$ corresponds to the amount of molecules with no elementary charge adsorbed on the surface of the material, $[\,]_0$ corresponds to the concentration value of molecules with no elementary charge used during the sampling steps, $@_s$ corresponds to the empirical value obtained in step (i"), $@_r$ corresponds to the empirical value obtained in step (j"), and $V_s$ corresponds to the volume of liquid contained in the test sample obtained in step (a");
(ñ") determining the amount of molecules with no elementary charge desorbed on the surface of the material using the equation:

$$n'_{\text{sin carga}} = \left( [\,]_0 - \frac{[\,]_0 @_S}{@_r} \right) V_S$$

where $n'_{\text{sin carga}}$ corresponds to the amount of molecules with no elementary charge desorbed from the surface of the material, $[\,]_0$ corresponds to the value of concentration of molecules with no elementary charge used during the sampling steps, $@_s$ corresponds to the empirical value obtained in steps (l") or (m"), $@_r$ corresponds to the empirical value obtained in step (k"), and $V_s$ corresponds to the volume of immiscible nonpolar solvent added to the samples during the development of steps (e") or (f"); and
(o") developing material balance calculations to infer the amount of molecules with no formal charge adsorbed and desorbed from the surface of the material.

9. The method to assess the lyophobic component of the surface of a material of interest in accordance with claim 8, **CHARACTERIZED in that** the immiscible nonpolar solvent is ethyl acetate.

10. The method to assess the lyophobic component of the surface of a material of interest in accordance with claim 9, **CHARACTERIZED in that** the material of interest is a colloid such as the AuNP@MUA colloid.

FIG. 1

FIG. 2

FIG. 3

FIG. 4

FIG. 5

FIG. 6

## INTERNATIONAL SEARCH REPORT

| | International application No. |
|---|---|
| | PCT/CL2019/050044 |

**A. CLASSIFICATION OF SUBJECT MATTER**

(CIP) G01N1/00, 15/00,15/04, 33/00, B82Y5/00, Y15/00, Y30/00 (2019.01)

According to International Patent Classification (IPC) or to both national classification and IPC

**B. FIELDS SEARCHED**

Minimum documentation searched (classification system followed by classification symbols)

(CIP) G01N33/00, B82Y5/00, 30/00 (CPC) G01N33/00, B82Y5/00,15/00,15/04, 15/042, 30/00

Documentation searched other than minimum documentation to the extent that such documents are included in the fields searched

Electronic data base consulted during the international search (name of data base and, where practicable, search terms used)

INAPI, GOOGLE PATENTS,ESP@CENET, USPTO, Derwent, PATENTSCOPE, BEIC

**C. DOCUMENTS CONSIDERED TO BE RELEVANT**

| Category* | Citation of document, with indication, where appropriate, of the relevant passages | Relevant to claim No. |
|---|---|---|
| X<br>Y | CA2864614A1 (PHARMADIAGNOSTICS NV)<br>22-08-2013<br>(See the entire document) | 1-3, 5-8, 10<br>4,9 |
| Y | MORENO-VILLOSLADA, I.,et al. Influence of the Linear Aromatic Density on Methylene Blue Aggregation around Polyanions Containing Sulfonate Groups. (2010) J. Phys. Chem. B 114, 4151-4158<br>DOI: 10.1021/jp909105r<br>(See the entire document, especially Section 3.4) | 4,9 |
| A | MORENO-VILLOSLADA, I.,et Interactions of 2,3,5-triphenyl-2H-tetrazolium chloride with poly(sodium 4-styrenesulfonate) studied by diafiltration and UV--vis spectroscopy (2004) Journal of Membrane Science 244 205--213<br>DOI:10.1016/j.memsci.2004.06.053<br>(See the entire document) | |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22/08/2019    22/August / 2019 | 26/09/2019    26/September / 2019 |

| Name and mailing address of the ISA/<br>INAPI, Av. Libertador Bernardo O'Higgins 194,<br>Piso 17, Santiago, Chile<br>Facsimile No. | Authorized officer<br>SCHMIDT ACHARAN, Paula<br>Telephone No. |
|---|---|

Form PCT/ISA/210 (second sheet) (January 2015)

**INTERNATIONAL SEARCH REPORT**

International application No.

PCT/CL2019/050044

C (Continuation).    DOCUMENTS CONSIDERED TO BE RELEVANT

| Category* | Citation of document, with indication, where appropriate, of the relevant passages | Relevant to claim No. |
|---|---|---|
| A | US2007/042507 A1(SHIK CHI TSANG) 22-02-2007 (See the entire document) | |
| P,A | CL2017001945 (UNIVERSIDAD TÉCNICA FEDERICO SANTA MARIA) 19-10-2018 (See the entire document) | |
| A | WO2005/002544 A2 (3M INNOVATIVE PROPERTIES COMPANY) 13-01-2005 (See the entire document) | |
| A | BHUMKAR, D. et al. Chitosan Reduced Gold Nanoparticles as Novel Carriers for Transmucosal Delivery of Insulin. Pharmaceutical Research. Agosto-2007; 24(8), 1415-1426. DOI: 10.1007/s11095-007-9257-9 (See the entire document) | |
| A | ES2259666 (T3) (BIOARRAY SOLUTIONS LTD) 16-10-2006 (See the entire document) | |
| A | WANG, Z. et al. Gold nanoparticle probes (2009) Coordination Chemistry Reviews 253, 1607–1618 DOI: 10.1016/j.ccr.2009.01.005 (See the entire document) | |
| A | DHAR, S. et al. Natural gum reduced/stabilized gold nanoparticles for drug delivery formulations. Chemistry. A European Journal. 2008;14:10244-10250 DOI: 10.1002/chem.200801093 (See the entire document) | |
| A | KUMAR, A., et al. Investigation into the Interaction between Surface-Bound Alkylamines and Gold Nanoparticles. (2003) Langmuir, 19: 6277-6282 DOI:10.1021/la034209c (See the entire document) | |

Form PCT/ISA/210 (continuation of second sheet) (January 2015)

**INTERNATIONAL SEARCH REPORT**
Information on patent family members

International application No.

**PCT/CL2019/050044**

| | | | |
|---|---|---|---|
| CA2864614A1 | 22-08-2013 | AU2013220314 (A1) | 14-08-2014 |
| | | AU2013220314 (B2 | 10-03-2016 |
| | | BE1020732 (A5) | 01-04-2014 |
| | | EP2814774 (A1) | 24-12-2014 |
| | | HK1203919 (A1) | 06-11-2015 |
| | | IN1800MUN2014 (A | 03-07-2015 |
| | | US2015024402 (A1) | 22-01-2015 |
| | | US9678066 (B2) | 13-06-2017 |
| | | US2017248589 (A1) | 31-08-2017 |
| | | WO2013121011 (A1) | 22-08-2013 |
| | | | |
| US 2007/042507 A1 | 22-02-2007 | EP1649263 (A2) | 26-04-2006 |
| | | JP2007530397 (A) | 01-11-2007 |
| | | WO2005007284 (A2) | 27-01-2005 |
| | | WO2005007284 (A3) | 16-06-2005 |
| | | | |
| CL2017001945 A1 | 19-10-2018 | WO2019023814 (A1) | 07-02-2019 |
| | | | |
| WO2005/002544 A2 | 13-01-2005 | WO2005002544 (A3 | 21-04-2005 |
| | | CN1798543 (A) | 05-07-2006 |
| | | EP1628635 (A2) | 01-03-2006 |
| | | JP2006526626 (A) | 24-11-2006 |
| | | KR20060038937 (A) | 04-05-2006 |
| | | US2004242730 (A1) | 02-12-2004 |
| | | US7109247 (B2) | 19-09-2006 |
| | | US2006286175 (A1) | 21-12-2006 |
| | | US7425582 (B2) | 16-09-2008 |
| | | US2007077209 (A1) | 05-04-2007 |
| | | US7476694 (B2) | 13-01-2009 |

Form PCT/ISA/210 (patent family annex) (January 2015)

**INTERNATIONAL SEARCH REPORT**
Information on patent family members

| International application No. |
|---|
| PCT/CL2019/050044 |

| ES2259666 (T3) | 16-10-2006 | AT319087 (T) | 5-03-2006 |
|---|---|---|---|
| | | AU7299301 (A) | 02-01-2002 |
| | | AU2001272993 (B2) | 10-03-2005 |
| | | AU2002360812 (A1) | 24-07-2003 |
| | | AU2002360812 (B2) | 24-07-2003 |
| | | CA2413978 (A1) | 27-12-2001 |
| | | CA2413978 (C) | 27-12-2001 |
| | | CA2471691 (A1) | 17-07-2003 |
| | | CA2635452 (A1) | 27-12-2001 |
| | | CN1636136 (A) | 06-07-2005 |
| | | DE60117556 (T2) | 02-11-2006 |
| | | EP1311839 (A1) | 21-05-2003 |
| | | EP1311839 (A4) | 21-05-2003 |
| | | EP1311839 (B1) | 21-05-2003 |
| | | EP1461355 (A2) | 29-09-2004 |
| | | EP1461355 (A4) | 29-09-2004 |
| | | JP2005514618 (A) | 19-05-2005 |
| | | JP4280637 (B2) | 19-05-2005 |
| | | JP2004514114 (A) | 13-05-2004 |
| | | JP4744778 (B2) | 13-05-2004 |
| | | KR20040086256 (A) | 08-10-2004 |
| | | NZ533753 (A) | 26-10-2007 |
| | | US2004132122 (A1) | 08-07-2004 |
| | | US7892854 (B2) | 08-07-2004 |
| | | US2005272049 (A1) | 08-12-2005 |
| | | US8486720 (B2) | 08-12-2005 |
| | | US2006240416 (A1) | 26-10-2006 |
| | | US9709559 (B2) | 26-10-2006 |
| | | US2005244850 (A1) | 03-11-2005 |
| | | US2005277128 (A1) | 15-12-2005 |
| | | US2007231825 (A1) | 04-10-2007 |
| | | US2008241936 (A1) | 02-10-2008 |
| | | US2013288920 (A1) | 31-10-2013 |
| | | US2015024974 (A1) | 22-01-2015 |

Form PCT/ISA/210 (patent family annex) (January 2015)